# EUROPÄISCHE PATENTSCHRIFT

(11) **EP 0 955 201 B1**
(45) Veröffentlichungstag und Bekanntmachung des Hinweises auf die Patenterteilung: **20.08.2003**
(21) Anmeldenummer: 99106667.1
(22) Anmeldetag: 01.04.1999
(51) Int. Cl.: B60K 37/06, G06M 1/34

(54) **Anzeigevorrichtung**
Display device
Dispositif d'affichage

(30) Priorität: 04.05.1998 DE 19819788
(43) Veröffentlichungstag der Anmeldung: 10.11.1999
(73) Patentinhaber: Siemens Aktiengesellschaft, 80333 München (DE)
(72) Erfinder: Wilhelm, Heinz-Günther, 65191 Wiesbaden (DE)

(56) Entgegenhaltungen:
- EP-A- 0 633 453
- DE-A- 19 804 517

## Beschreibung

Die Erfindung betrifft eine Anzeigevorrichtung, insbesondere für ein Kraftfahrzeug, mit einem Gehäuse und mit einem zur Handbedienung ausgeführten Betätigungsschaft, welcher im Inneren des Gehäuses der Anzeigevorrichtung gehalten ist und durch eine Öffnung nach außen aus dem Gehäuse herausgeführt ist und insbesondere der Verstellung einer Anzeige dient, wobei der Betätigungsschaft im Bereich seines einem Beobachter der Anzeigevorrichtung abgewandten Endes in einer Lagerstelle gelagert ist.

Anzeigevorrichtungen der vorstehenden Art sind allgemein bekannt und gebräuchlich. Diese besitzen neben den ständig im Blickfeld des Betrachters liegenden Anzeigen, wie beispielsweise einer Tachometeranzeige oder einer Drehzahlanzeige, auch solche Anzeigeelemente, die frei wählbar oder vom Bediener selbst einzustellen sind und daher von Hand betätigbar sein müssen. Dies betrifft vor allem Bordcomputer, aber auch Tageskilometerzähler und Uhren, sofern diese nicht schon Funktionseinheiten des Bordcomputers sind. Die Handbetätigung erfolgt dabei mittels des Betätigungsschaftes, der hierzu in dem Gehäuse drehbar oder verschieblich angeordnet ist. Die Bedienung erfolgt hierbei zumeist durch eine Druckbetätigung des Betätigungsschaftes gegen die Federkraft eines Federelementes. In anderen bekannten Ausführungsformen erfordert der Betätigungsschaft eine Drehbewegung. Der Betätigungsschaft besitzt eine im Inneren des Gehäuses angeordnete Führung, welche aus einer quer zur Längsachse des Betätigungsschaftes verlaufenden Fläche besteht, gegen die der Betätigungsschaft mit einer Erweiterung mittels des Federelementes angepresst wird. Durch diese Lagerstelle wird der Betätigungsschaft in dem Gehäuse ausgerichtet und fixiert.

Nachteilig bei dem beschriebenen Stand der Technik wirkt sich vor allem aus, dass zwischen dem Betätigungsschaft und der Öffnung zum Ausgleich von Toleranzen ein Spalt vorgesehen werden muss. Hierdurch kommt es unter dem Einfluss von Vibrationen zum Schwingen des Betätigungsschaftes zwischen den Rändern der Öffnung, wodurch ein deutlich hörbares Geräusch erzeugt wird.

Um dies zu vermeiden, ist bereits daran gedacht worden, den Betätigungsschaft in die Öffnung genau einzupassen und so eine Querbewegung des Betätigungsschaftes in der Öffnung zu verhindern. Hierdurch wird der Aufwand bei der Montage aufgrund enger einzuhaltender Toleranzen so nachteilig beeinflusst, dass sich diese Lösung in der Praxis nicht durchsetzen konnte.

Ein anderer Lösungsvorschlag beschreibt eine Anzeigevorrichtung mit einem wesentlich vergrößerten Spalt zwischen dem Rand der Öffnung und dem Betätigungsschaft, so dass der Betätigungsschaft frei in der Öffnung hin- und herschwingen kann, ohne gegen den Rand der Öffnung anzuschlagen. Hierbei erweist es sich als ungünstig, dass durch den Spalt zwischen dem Rand der Öffnung und dem Betätigungsschaft Schmutzpartikel eintreten und sich im Inneren des Gehäuses sammeln können. Dies wird vor allem dann als störend empfunden, wenn die Öffnung im Deckglas der Anzeigevorrichtung angeordnet ist und die Schmutzpartikel so im ständigen Blickfeld des Betrachters sichtbar sind. Außerdem entsteht durch den großen Spalt beim Betrachter ein minderwertiger Eindruck. Eine Abdichtung des Spaltes mit einem Dichtungselement erhöht dabei den Produktionsaufwand und wird bei Anordnung in einem Deckglas der Anzeigevorrichtung als optisch störend empfunden.

Die EP 0 633 453 A1 beschreibt eine Anzeigevorrichtung mit einem Betätigungsschaft, der im Bereich seines einem Beobachter der Anzeigevorrichtung abgewandten Endes in einer Lagerstelle gelagert ist und in einer von der ersten Lagerstelle beabstandeten zweiten Lagerstelle gehalten ist. Hierzu ist ein mit dem Betätigungsschaft verbundener Stützkörper vorgesehen, welcher in einer Öffnung gegen eine Anzeigescheibe anliegt.

Der Erfindung liegt das Problem zugrunde, bei einem gegenüber den üblichen Anzeigevorrichtungen im wesentlichen unverändert geringen Spalt zwischen dem Betätigungsschaft und der Öffnung ein Anschlagen des Betätigungsschaftes gegen den Rand der Öffnung und die damit verbundenen störenden Geräusche zu vermeiden.

Dieses Problem wird durch die Merkmale des Anspruchs 1 gelöst.

Durch die Erfindung wird die durch die Vibrationen angeregte seitliche Auslenkung vermieden oder zumindest soweit gedämpft, dass ein seitliches Anschlagen am Rand der Öffnung zuverlässig verhindert werden kann. Der Spalt zwischen dem Betätigungsschaft und der Öffnung kann hierbei gegenüber den üblichen Ausführungen unverändert sein, wodurch das Eindringen von Schmutzpartikeln oder schädigenden Umwelteinflüssen weitgehend vermieden werden kann und darüber hinaus ein optisch hochwertiger Eindruck erreicht wird. Die Wirkung des Stützkörpers wird um so mehr verbessert, je weiter die Kontaktfläche zwischen dem Stützkörper und dem Betätigungsschaft von der ersten Lagerstelle entfernt angeordnet ist. Durch die elastische Ausführung des Stützkörpers und seine Vorspannung ergibt sich eine kraftschlüssige Verbindung zwischen dem Stützkörper und dem Betätigungsschaft, wodurch die Dämpfungseigenschaften des Stützkörpers verbessert werden. Weiterhin kann der Aufwand bei der Herstellung und der Montage durch höhere Toleranzen verringert werden.

Eine besonders wirkungsvolle Weiterbildung der Erfindung lässt sich dadurch erreichen, dass der Betätigungsschaft mittels des Stützkörpers gegen den Rand der Öffnung anlegbar ist. Mit der Kontaktfläche zwischen dem Betätigungsschaft und dem Rand der Öffnung wird eine weitere Lagerstelle geschaffen, wodurch der Betätigungsschaft spielfrei in das Gehäuse eingesetzt werden kann. Die auf die Anzeigevorrichtung übertragenen Vibrationen versetzen den Betätigungsschaft daher nicht in Schwingung, die zum abwechselnden Anschlagen des Betätigungsschaftes gegen einander gegenüberliegende Bereiche der Öffnung führt. Der Stützkörper kann dadurch einfach gestaltet sein und kann beispielsweise auch lediglich einseitig gegen den Betätigungsschaft anliegen.

Besonders günstig ist es hierbei, wenn der Stützkörper elastisch verformbar ausgeführt ist und gegen den Betätigungsschaft vorgespannt ist. Durch diese kraftschlüssige Verbindung zwischen dem Stützkörper und dem Betätigungsschaft werden die Dämpfungseigenschaften des Stützkörpers verbessert. Weiterhin kann der Aufwand bei der Herstellung und der Montage durch höhere Toleranzen verringert werden.

Der Stützkörper ist hierbei besonders einfach gestaltet, wenn er eine Hülse ist, in die der Betätigungsschaft eingesetzt ist. Diese liegt gegen die Oberfläche des Betätigungsschaftes an und ermöglicht gleichzeitig dessen leichte Bedienung. Diese Ausführung ist daher leicht in herkömmliche Anzeigevorrichtungen zu integrieren und einfach in der Ausführung.

Eine besonders vorteilhafte Weiterbildung der Erfindung ist dann realisiert, wenn der Stützkörper mehrere über den Umfang des Betätigungsschaftes gleichmäßig verteilte und gegen diesen anliegende Federarme aufweist. Diese Ausführung ermöglicht das selbsttätige Zentrieren des Betätigunsschaftes zwischen den Federarmen, so dass weitere Hilfsmittel hierfür entfallen können.

Eine vorteilhafte Ausführungsform der Erfindung ist gegeben, wenn der Betätigungsschaft um seine Längsachse drehbar gelagert ist. Bei dieser drehbeweglichen Ausführungsform ermöglicht der erfindungsgemäße Stützkörper eine einfache Betätigung, wobei gleichzeitig die Bedienkraft relativ gering gehalten wird. Hierbei werden mehrere Schaltpositionen ermöglicht. Wenn der Betätigungsschaft axial verschieblich gelagert ist, lässt er sich vorteilhaft mittels lediglich geringer Druckkraft bedienen wodurch das Greifen des Betätigungsschaftes entfallen kann. Der Stützkörper verhindert dabei das seitliche Ausweichen des Betätigungsschaftes quer zur Betätigungsrichtung, wodurch für den Bediener eine zuverlässige und sichere Bedienung gewährleistet wird.

Dies wird besonders dadurch unterstützt, dass der Betätigungsschaft wenigstens eine in Längsrichtung verlaufende Vertiefung besitzt, in die der Stützkörper eingreift. Diese gibt dem Betätigungsschaft zusätzliche Führung und verhindert das ungewollte Verdrehen. Hierbei wird gleichzeitig auch eine gestufte Drehbewegung ermöglicht, wobei der Betätigungsschaft gegen die Federkraft des Stützkörpers drehbar ist und dem Bediener dadurch eine haptische Rückmeldung der eingestellten Rastposition ermöglicht wird.

Gemäß einer anderen vorteilhaften Weiterbildung der Erfindung ist das Gehäuse an einer dem Beobachter zugewandten Seite mit einem Deckglas versehen und der Betätigungsschaft durch eine Öffnung des Deckglases aus dem Gehäuse herausgeführt. Auf diese Weise ist es die Bedienung vereinfachend möglich, den Betätigungsschaft in unmittelbarer Nähe einer verstellbaren Anzeige anzuordnen. Außerdem kann somit das Deckglas die Anzeigevorrichtung großflächig abdeckend ausgeführt werden, wodurch die Übersichtlichkeit und Ablesbarkeit erheblich verbessert wird.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine lediglich abschnittsweise und teilweise geschnitten dargestellte Aufsicht einer Anzeigevorrichtung mit einem Betätigungsschaft,
- Fig. 2: den Betätigungsschaft in einem Querschnitt.

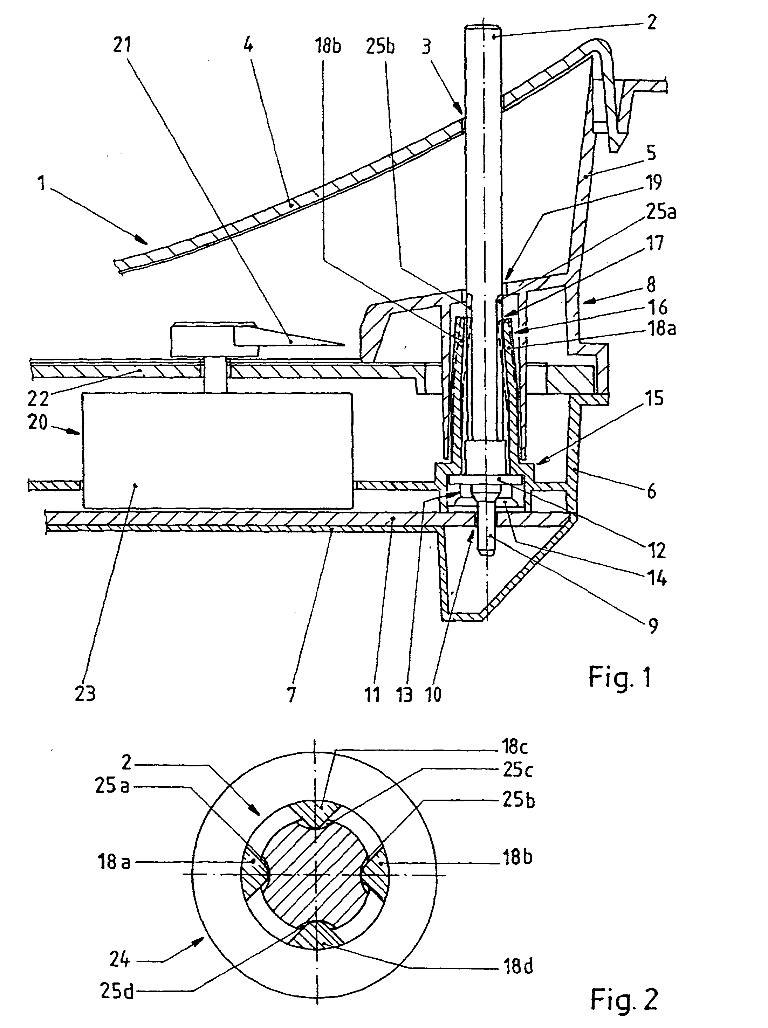

In Figur 1 ist eine erfindungsgemäße Anzeigevorrichtung 1 in einer teilweise geschnittenen Aufsicht zu erkennen. Ein als Stellschaft ausgeführter Betätigungsschaft 2 ist durch eine Öffnung 3 eines Deckglases 4 nach außen, einem möglichen Betrachter entgegen, hindurchgeführt. Das Deckglas 4 bildet zusammen mit einem Frontrahmen 5, einem Gehäuseunterteil 6 und einer Bodenplatte 7 ein Gehäuse 8. Der Betätigungsschaft besitzt an seinem dem freien Ende gegenüberliegenden Ende eine Führung 9, die in eine Ausnehmung 10 einer Leiterplatte 11 axial verschieblich eingesetzt ist. Weiterhin besitzt der Betätigungsschaft 2 eine als Kragen ausgeführte Erweiterung 12, welche mittels der Federkraft eines als Schaltmatte 13 ausgeführten Federelementes 14 gegen das Gehäuseunterteil 6 angepresst ist und damit eine Lagerstelle 15 für den Betätigungsschaft 2 bildet. Der Betätigungsschaft 2 ist oberhalb der Lagerstelle 15 von einem einteilig mit dem Gehäuseunterteil 6 verbundenen Stützkörper 16 gehalten, welcher so eine weitere Lagerstelle 17 bildet. Der Stützkörper 16 besitzt mehrere über den Umfang des Betätigungsschaftes 2 gleichmäßig verteilte Federarme 18a, 18b, von denen zwei teilweise gestrichelt dargestellt sind und jeweils in eine Vertiefung 25a, 25b des Betätigungsschaftes 2 eingreifen. Die Federarme 18a, 18b sind gegenüber dem Betätigungsschaft 2 vorgespannt, wodurch dieser in seiner Position fixiert und eine Dämpfung der vom Fahrzeug auf den Betätigungsschaft 2 übertragenen Vibrationen ermöglicht wird. Der Betätigungsschaft 2 ist weiterhin durch eine Ausnehmung 19 des Frontrahmens 2 hindurchgeführt, wodurch dem Betrachter der Blick auf hinter dem Frontrahmen gelegene Bauelemente versperrt ist und eine Abschirmung einer nicht dargestellten Hintergrundbeleuchtung ermöglicht wird. Zum Verschieben des Betätigungsschaftes 2 wird auf diesen eine in axialer Richtung wirkende Betätigunskraft aufgebracht, welche die Federkraft des Federelementes 14 überwindet und durch eine axiale Verschiebung in der Ausnehmung 10 der Leiterplatte 11 einen elektrischen Kontakt herstellt. Nicht dargestellt ist eine außerhalb der Zeichnungsebene liegende Kontaktfläche zwischen dem Betätigungsschaft 2 und dem Rand der Öffnung 3. Diese Kontaktfläche ergibt sich aufgrund der Toleranzen der einzelnen Bauteile bei der Montage von selbst. Der Betätigungsschaft 2 kann auch durch eine geeignete Auslegung des Stützkörpers 16 gegen einen bestimmten Randbereich der Öffnung 3 vorgespannt sein.

Zu erkennen ist weiterhin ein Zeigerinstrument 20 mit einer für den Betrachter durch das Deckglas 4 hindurch sichtbaren Zeigerfahne 21 und einem auf der Rückseite eines Zifferblattes 22 angeordneten Antriebssystem 23.

Ebenso wie die dargestellte Anordnung des Betätigungsschaftes 2 im Randbereich der Anzeigevorrichtung 1 können weitere Betätigungsschafte an beliebiger Stelle in dem Gehäuse 8 angeordnet werden, beispielsweise auch in der Mitte der Anzeigevorrichtung 1.

Figur 2 zeigt in einer vergrößerten Darstellung einen Querschnitt durch den in Figur 1 dargestellten Betätigungsschaft 2 mit dem aus vier Federarmen 18a, 18b, 18c und 18d bestehenden Stützkörper 16 sowie einen mit dem Stützkörper 16 einteilig verbundenen Abschnitt 24 des Gehäuseunterteils 6. Die Federarme 18a, 18b, 18c und 18d sind über den Umfang des Betätigungsschaftes 2 gleichmäßig verteilt und liegen jeweils gegen eine der Vertiefungen 25a, 25b, 25c und 25d an. Hierbei besitzen die Federarme 18a, 18b, 18c und 18d einen in etwa trapezförmigen Querschnitt, wodurch die Kontaktflächen zwischen den jeweiligen Federarmen 18a, 18b, 18c und 18d und dem Betätigungsschaft 2 relativ klein sind. Dadurch wird eine einfache Zentrierung des Betätigungsschaftes 2 zwischen den Federarmen 18a, 18b, 18c und 18d erreicht, wobei gleichzeitig die Reibung bei der Betätigung gering bleibt.

## Patentansprüche

1. Anzeigevorrichtung (1), insbesondere für ein Kraftfahrzeug, mit einem Gehäuse (8) und mit einem zur Handbedienung ausgeführten Betätigungsschaft (2), welcher im Inneren des Gehäuses (8) der Anzeigevorrichtung (1) gehalten ist und durch eine Öffnung (3) nach außen aus dem Gehäuse herausgeführt ist und insbesondere der Verstellung einer Anzeige dient, wobei der Betätigungsschaft (2) im Bereich seines einem Beobachter der Anzeigevorrichtung (1) abgewandten Endes in einer Lagerstelle (15) gelagert ist, wobei der Betätigungsschaft (2) in einer von der ersten Lagerstelle (15) beabstandeten zweiten Lagerstelle (17) mittels eines mit dem Gehäuse (8) verbundenen, nachgiebigen Stützkörpers (16) gehalten ist, welcher gegen den Betätigungsschaft anliegt und so die weitere Lagerstelle (17) bildet, wobei der Stützkörper (16) elastisch verformbar ausgeführt ist und gegen den Betätigungsschaft (2) vorgespannt ist.

2. Anzeigevorrichtung nach Anspruch 1, **dadurch gekennzeichnet, dass** der Betätigungsschaft (2) mittels des Stützkörpers (16) gegen den Rand der Öffnung (3) anlegbar ist.

3. Anzeigevorrichtung nach einem der vorangehenden Ansprüche, **dadurch gekennzeichnet, dass** der Stützkörper (16) eine Hülse ist, in die der Betätigungsschaft (2) eingesetzt ist.

4. Anzeigevorrichtung nach einem der vorangehenden Ansprüche, **dadurch gekennzeichnet, dass** der Stützkörper (16) mehrere über den Umfang des Betätigungsschaftes (2) gleichmäßig verteilte und gegen diesen anliegende Federarme (18a, 18b, 18c, 18d) aufweist.

5. Anzeigevorrichtung nach einem der vorangehenden Ansprüche, **dadurch gekennzeichnet, dass** der Betätigungsschaft (2) um seine Längsachse drehbar gelagert ist.

6. Anzeigevorrichtung nach einem der vorangehenden Ansprüche, **dadurch gekennzeichnet, dass** der Betätigungsschaft (2) axial verschieblich gelagert ist.

7. Anzeigevorrichtung nach zumindest einem der vorangehenden Ansprüche, **dadurch gekennzeichnet, dass** der Betätigungsschaft (2) wenigstens eine in Längsrichtung verlaufende Vertiefung (25a, 25b, 25c, 25d) besitzt, in die der Stützkörper (16) eingreift.

8. Anzeigevorrichtung nach einem der vorangehenden Ansprüche, **dadurch gekennzeichnet, dass** das Gehäuse (8) an einer dem Beobachter zugewandten Seite mit einem Deckglas (4) versehen ist und dass der Betätigungsschaft (2) durch eine Öffnung (3) des Deckglases (4) aus dem Gehäuse (8) herausgeführt ist.

## Claims

1. Display device (1), in particular for a motor vehicle, having a housing (8) and having an operating lever (2) which is designed for manual operation and which is secured in the interior of the housing (8) of the display device (1) and leads outwards out of the housing through an opening (3), and is used in particular for adjusting a display, the operating lever (2) being mounted in a bearing point (15) in the vicinity of its end which is remote from a viewer of the display device (1), wherein the operating lever (2) is secured in a second bearing point (17), at a distance from the first bearing point (15), by means of a resilient supporting element (16) which is connected to the housing (8) and which bears against the operating lever and thus forms the further bearing point (17), the supporting element (16) being of elastically deformable design and being prestressed against the operating lever (2).

2. Display device according to Claim 1, **characterized in that** the operating lever (2) can be made to bear against the edge of the opening (3) by means of the supporting element (16).

3. Display device according to one of the preceding claims, **characterized in that** the supporting element (16) is a sleeve into which the operating lever (2) is inserted.

4. Display device according to one of the preceding claims, **characterized in that** the supporting element (16) has a plurality of spring arms (18a, 18b, 18c, 18d) which are distributed uniformly over the circumference of the operating lever (2) and bear against it.

5. Display device according to one of the preceding claims, **characterized in that** the operating lever (2) is mounted so as to be rotatable about its longitudinal axis.

6. Display device according to one of the preceding claims, **characterized in that** the operating lever (2) is mounted so as to be axially displaceable.

7. Display device according to at least one of the preceding claims, **characterized in that** the operating lever (2) has at least one depression (25a, 25b, 25c, 25d) which runs in the longitudinal direction and in which the supporting element (16) engages.

8. Display device according to one of the preceding claims, **characterized in that** the housing (8) is provided with a cover glass (4) on a side facing the viewer, and **in that** the operating lever (2) leads out of the housing (8) through an opening (3) in the cover glass (4).

## Revendications

1. Dispositif d'affichage (1), en particulier pour un véhicule à moteur, comprenant un boîtier (8) présentant une tige de commande (2) formée pour s'adapter à une commande manuelle, la tige étant retenue à l'intérieur du boîtier (8) du dispositif d'affichage (1) et s'étendant à l'extérieur du boîtier par une ouverture (3) et servant en particulier au réglage d'un affichage, la partie de l'extrémité de la tige de commande (2) opposée à un observateur étant logée dans un palier (15), la tige de commande (2) étant tenue par un second palier (17), distant du premier palier (15), par l'intermédiaire d'un corps de support élastique (16) relié au boîtier (8) et étant en contact avec la tige de commande et formant ainsi un second palier (17), le corps de support étant élastiquement déformable et précontraint en direction de la tige de commande (2).

2. Dispositif d'affichage selon la revendication 1, **caractérisé en ce que** la tige de commande (2) peut être appuyée par le corps de support (16) contre le bord de l'ouverture (3).

3. Dispositif d'affichage selon l'une des revendications précédentes, **caractérisé en ce que** le corps de support (16) est une douille dans laquelle la tige de commande (2) est insérée.

4. Dispositif d'affichage selon l'une des revendications précédentes, **caractérisé en ce que** le corps d'appui (16) comporte plusieurs bras élastiques (18a, 18b, 18c, 18d) qui sont uniformément répartis sur la périphérie de la tige de commande (2) et s'appuyant contre la tige.

5. Dispositif d'affichage selon l'une des revendications précédentes, **caractérisé en ce que** la tige de commande (2) est montée de façon à pouvoir tourner autour de son axe longitudinal.

6. Dispositif d'affichage selon l'une des revendications précédentes, **caractérisé en ce que** la tige de commande (2) est montée de façon à pouvoir se déplacer axialement.

7. Dispositif d'affichage selon au moins l'une des revendications précédentes, **caractérisé en ce que** la tige de commande (2) comporte au moins un évidement longitudinal (25a, 25b, 25c, 25d) dans lequel s'engage le corps de support (16).

8. Dispositif d'affichage selon l'une des revendications précédentes, **caractérisé en ce que** le boîtier (8) est pourvu d'un verre de couverture (4) du côté de l'observateur, et que la tige de commande (2) dépasse le boîtier (8) par une ouverture (3) prévue dans le verre de couverture (4).
